Europäisches Patentamt

European Patent Office

Office européen des brevets

(11) Veröffentlichungsnummer : **0 071 210**
**B1**

(12) **EUROPÄISCHE PATENTSCHRIFT**

(45) Veröffentlichungstag der Patentschrift :
**16.04.86**

(21) Anmeldenummer : **82106679.2**

(22) Anmeldetag : **23.07.82**

(51) Int. Cl.⁴ : **D 04 H 13/00**, D 06 N 7/00,
A 62 C 7/00, A 62 B 17/00,
F 16 L 59/04

(54) Schichtkörper als Brand- und Wärmeschutz.

(30) Priorität : **27.07.81 DE 3129557**

(43) Veröffentlichungstag der Anmeldung :
**09.02.83 Patentblatt 83/06**

(45) Bekanntmachung des Hinweises auf die Patenterteilung : **16.04.86 Patentblatt 86/16**

(84) Benannte Vertragsstaaten :
**AT BE CH DE FR GB IT LI LU NL SE**

(56) Entgegenhaltungen :
**DE-A- 1 435 762**
**DE-A- 1 560 651**
**DE-A- 2 321 362**
**DE-A- 2 352 019**
**DE-A- 2 716 706**
**DE-A- 2 855 059**
**FR-A- 2 022 947**
**NL-A- 7 212 202**
**US-A- 2 340 370**
**US-A- 4 064 317**
**US-A- 4 250 172**

(73) Patentinhaber : **Tesch, Günter Horst**
**Avenue Jean-Marie-Musy 15**
**CH-1700 Fribourg (CH)**

(72) Erfinder : **Tesch, Günter Horst**
**Avenue Jean-Marie-Musy 15**
**CH-1700 Fribourg (CH)**

(74) Vertreter : **Lesser, Karl-Bolko, Dipl.-Ing.**
**European Patent Attorney Johanneskirchnerstrasse**
**149a**
**D-8000 München 81 (DE)**

## Beschreibung

Die Erfindung betrifft einen Schichtkörper als Brand und Wärmeschutz.

Schichtkörper der gattungsgemäßen Art sind z. B. als Feuerlöschdecken bekannt (DE-A-2 352 019), die aus einer Bahn aus feuerfesten Glasfasern bestehen, die mindestens an einer Seite mit einer durch Wärme zerstörbaren Polyäthylenfolie vernäht ist und zwischen den Bahnen mindestens einen mit pulverförmigen, feuerhemmenden, z. B. ein Gas abgebendem oder Sauerstoff verdünnendem oder verbrauchendem Material gefüllten Raum besitzt. Dieses material kann herkömmliches Feuerlöschmaterial sein, z. B. Natriumhydrogencarbonat-Pulver. Die durch das Nähen gebildeten Längsnähte ergeben schlauchartige Rinnen, in denen das Feuerlöschmaterial sich bewegen. z. B. zusammenfallen oder zusammenballen, kann. Bei Beschädigung der Polyäthylenfolie staubt das sehr feine Material heraus und ergibt darüber hinaus eine starke Belästigung der Umwelt, wenn eine solche Beschädigung z. B. beim Transport oder bei der Lagerung eintritt. Die bekannte Feuerlöschdecke ist z. B. auch nur als Brandschutz von Sachen und z. B. nicht zum Schutz für Menschen einsetzbar, weil nicht nur eine Verletzung des menschlichen Körpers durch aufgeschmolzene Kunststoffpartikel, sondern auch Vergiftungen wegen des austretenden Staubes oder von Dämpfen beim Aufschmelzen der Polyäthylenfolie auftreten können. Löst sich z. B. bei Beschädigung des Nähfadens die Nähnaht ab, so ist der Zusammenhalt des Feuerlöschmaterials in den schlauchartigen Rinnen nicht mehr gewährleistet. Beim Aufschmelzen der Polyäthylenfolie beim Einsatz bei Brand staubt das Feuerlöschmaterial auch nur an den aufgeschmolzenen Stellen wie aus einer Spritze heraus.

Aus der DE-A-2 855 059 ist ein faserverstärkter Schichtkörper bekannt, bei dem eine Kernschicht aus körnigen oder faserigen Partikeln zwischen einer Unterlagsschicht und einer Deckschicht als Außenschichten eingebracht ist. Mindestens eine der beiden Außenschichten besteht aus aktiv nadelfähigen Fasern. Diese drei Schichten sind miteinander vernadelt.

Als Material für die Kernschicht werden dort feinkörnige oder faserige feste Wirkstoffpartikel verwendet, wobei es sich unter anderem um zerkleinerte Leder-, Torf-, Baumrinden- oder Kunstschaumstoffpartikel, Aktiv- und Holzkohle, Ionenaustauscher und kosmetische Partikel handeln kann. All diese Partikel können von den Vernadelungsnadeln beim Vernadeln der drei Schichten sehr leicht durchstochen werden, teilweise brechen diese Partikel beim Vernadeln auseinander, d. h., größere Partikel werden in zwei oder mehrere kleinere Partikel aufgeteilt. Dadurch ist aber die Partikelgröße in der vernadelten Kernschicht nicht vorbestimmbar.

Die Verwendung des Schichtkörpers für Feuerlöschzwecke läßt sich dieser Druckschrift nicht entnehmen. Insbesondere werden dort keine Feuerlöschmittel beschrieben.

Durch die NL-A-7 212 202 ist ein Schichtkörper mit zwei Deckschichten, zwischen denen eine Füllschicht vernadelt ist, bekannt geworden, bei dem die Füllschicht aus Körnern, kleinen Stücken, Pulver oder Kugeln aus synthetischen Material besteht. Dieses Material weist keine definierte Form auf, insbesondere kann es sich um synthetische Schäume handeln. Auch dieser Schichtkörper ist aufgrund des verwendeten Materials nicht für Feuerlöschzwecke geeignet.

Der Erfindung liegt die Aufgabe zugrunde, einen gattungsgemäßen Schichtkörper zu schaffen, bei dem das feinkörnige Material festgehalten und der als Brand- und Wärmeschutz für Gegenstände, insbesondere aber auch für den Menschen anwendbar sein soll.

Diese Aufgabe wird erfindungsgemäß durch den Gegenstand des Anspruches 1 gelöst. Durch die vernadelten Deckschichten wird die Partikelschicht in vorteilhafter Weise mit einer Vielzahl der Fasern oder Fäden durchsetzt, die sich durch die Partikelschicht hindurch erstrecken und die Partikel in ihrer Lage halten. Es ist damit eine Vielzahl von Unterteilungen, z. B. Kammern, für die Partikel geschaffen, die von den Deckschichten und den vernadelten, sich quer zu den Deckschichten erstreckenden Fasern oder Fäden begrenzt sind. Dadurch erhält der Schichtkörper nicht nur einen eigenen Zusammenhalt, sondern die Partikel sind allseitig gehalten. Bei Beschädigungen, z. B. der Fasern oder Fäden, bleibt die Vernadelung an den nichtbeschädigten Stellen bestehen, weil die vernadelten Fasern oder Fäden untereinander unverbunden sind. Dadurch wird auch gewährleistet, daß die Partikel z. B. nur an der beschädigten Stelle austreten können, weil die weiteren vernadelten Stellen wie ein Riegel wirken. Es kann damit auch eine z. B. gleichmäßige Druchmischung der Partikel mit Fasermaterial und eine dichte Anordnung derselben mit einem herkömmlichen Verfahren ohne kostspielige Maßnahmen erfolgen, wie es z. B. durch Vernähen von Deckschichten unerreichbar ist.

Bei den körnigen Partikeln handelt es sich neben dem feuerhemmendem Material um ein reaktionsträges Material, wie z. B. Sand, Ton, Kies od. dgl. Derartige körnige Partikel können daher spröde sein und/oder auch abrasive Eigenschaften haben und z. B. ein Härte aufweisen, die sie beim Vernadeln vor Zerstörung schützt. Die Partikel weisen daher von ihrer Materie her Eigenschaften auf, die eigentlich gegen ein Vernadeln sprechen. Es hat sich jedoch in überraschender Weise gezeigt, daß die Deckschichten mit üblichen Vernadelungstechniken mittels Vernadelungsnadeln mit Widerhaken, z. B. üblichen Filznadeln, ohne wesentliche Beschädigung wie Abnutzung oder Zerstörung derselben durch die Lage der körnigen Partikel hindurch vernadelt werden können.

Dies ist zum Teil darauf zurückzuführen, daß die körnigen Partikel vor dem Vernadeln vorzugsweise gegeneinander verschiebbar vorliegen und beim Vernadeln von Nadeln getroffene Partikel seitlich ausweichen können.

2

Die vollkommen eingeschlossenen Partikel sind nicht wahllos oder willkürlich zwischen den Fasern des Schichtkörpers verteilt, sondern werden z. B. von den vernadelten Fasern oder Fäden durchsetzt, sodaß eine gleichmäßige Mischung mit den körnigen Partikeln erreicht werden kann. Durch die Vernadelung sind in vorteilhafter Weise z. B. Haltefasern oder -fäden erzeugt, durch welche die Partikel gegen eine Verschiebung in Richtung der Ebene mindestens der einen Deckschicht festgelegt und somit ein Rieseln derselben im Schichtkörper verhindert wird. Damit kann eine geschlossene Raumform des Schichtkörpers erreicht werden, die für Brand und Wärmeschutzzwecke vielfältig einsetzbar ist. Der Schichtkörper kann in vorteilhafter Weise sowohl zum Schutz von Gegenständen als auch von Menschen oder Tieren verwendet werden, da der Sand bekanntlich ein hochschmelzendes Produkt darstellt. Man kann daher z. B. eine Branddecke herstellen, die über das gegen Brand zu schützende Objekt oder über den Menschen gelegt oder geworfen werden kann. Bei dem Schichtkörper nach der Erfindung liegt daher vorzugsweise eine Flächenwirkung vor, die nicht von einem Aufschmelzen von einer Deckschicht abhängig ist, sondern der ganze Schichtkörper wirkt für sich. Der Brand kann daher in vorteilhafter Weise bereits durch Überdecken erstickt werden, wobei die Wärme vom Sand aufgenommen wird.

In vorteilhafter Weise bestehen beide Deckschichten aus Fasermaterial, daß z. B. durch den Brand nicht abschmilzt, sondern verkohlt oder verbrennt, z. B. aus Wolle oder behandelten Zellulosefasern. Ein Durchbrennen der Fasern zum zu schützenden Objekt wird aber durch die Sandschicht verhindert, da Sand ein schlechtes Wärmeleitvermögen hat und so als Isolator wirkt. Bei Sand handelt es sich auch um ein spezifisch schweres Material, das je nach Körnung in hoher Dichte vorliegen kann, sodass der erfindungsgemässe Schichtkörper z. B. in Form einer Brandschutzdecke oder eines Brandschutzkissens durch seine eigene Schwere auf dem zu schützenden oder zu löschenden Objekt verbleibt und auf diesem satt anliegen und sich gegebenenfalls an dieses auch anschmiegen kann.

Eine besonders gute Wärmeschutzwirkung kann auch dadurch erreicht werden, dass mindestens die dem Feuer zugewandte Seite des Schichtkörpers, z. B. der Matte, mit einer reflektierenden Folie, z. B. einer Aluminiumfolie oder einer mit Aluminium bedampften Kunststoff-Folie, belegt wird. Hierdurch kann die Wärmestrahlung zusätzlich reflektiert und weniger Wärme überhaupt in den Schichtkörper eindringen.

Darüber hinaus können der inneren Schicht aus den körnigen Partikeln, wie Sand od. dgl., feuerhemmende Zusätze, wie z. B. ein Gas abgebende oder Sauerstoff verdünnende oder verbrauchende Materialien, zugegeben werden. Die körnigen Partikel können daher als Verdünnungs- oder Mischungsmittel verwendet werden. Dieses hat den Vorteil, dass z. B. Löschpulver als Zusatz eingebracht sein kann, dessen Vernadeln zwischen den Deckschichten alleine, wegen ihrer hohen Staubgefahr nicht nur schwierig, sondern unmöglich ist. Die feuerhemmenden Zusätze können z. B. als Granulate, Pellets oder auch Pulver vorliegen. Sie können mit den körnigen Partikeln gemischt, z. B. durch dieselben verdünnt sein oder an die körnigen Partikel gebunden vorliegen. Durch den Einsatz der körnigen Partikel, z. B. als Verdünnungs- oder Mischungsmittel können kleine, aber auch ausreichend wirksame Mengen der feuerhemmenden Zusätze in einer vorteilhaften Weise verteilt und im Schichtkörper festgehalten werden, wie es z. B. bisher nicht möglich gewesen ist. Die feuerhemmenden Zusätze können z. B. derart verteilt, z. B. verdünnt, in der Partikelschicht vorliegen und/oder Eigenschaften besitzen, dass dieselben erst bei einer bestimmten Temperatur der körnigen Partikel, insbesondere wenn diese Sand sind, wirksam werden, d. h. sich z. B. feuerhemmend zersetzen. Durch die Verteilung der feuerhemmenden Zusätze in der Partikelschicht, insbesondere Sandschicht, im erfindungsgemässen Schichtkörper kann auch gewährleistet werden, dass eine Entmischung zwischen den körnigen Partikeln und den feuerhemmenden Zusätzen verhindert wird. Es kann vielmehr eine Dosierung von sehr schwerem Sandmaterial und einem sehr leichten Material, wie z. B. den feuerhemmenden Zusätzen, dicht nebeneinander in den durch den Schichtkörper gebildeten Kammern erfolgen.

Die feuerhemmenden Zusätze können trockene Chemikalien, z. B. Natriumbikarbonat ($NaHCO_3$), Kaliumbikarbonat ($KHCO_3$), Natriumdihydrogenphosphat ($NaH_2PO_4$) oder Ammoniumhydrogensulphat ($NH_4HSO_4$) sein.

In vielfältiger Weise kann der erfindungsgemässe Schichtkörper z. B. als Matte, Kissen, Platte, Umhüllung, Decke oder Schlauch vorliegen und er kann biegsam, z. B. aufrollbar oder aufwickelbar sein.

Da die körnigen Partikel durch einzelne Haltefasern in dem Schichtkörper gehalten werden, kann dieser auch in verschiedene Zuschnitte aufgeteilt werden, die dann z. B. mittels Nähen, Kleben oder auch Vernadeln zu einer Schutzkleidung verarbeitet werden können. Eine solche Schutzkleidung kann beispielsweise ein Mantel oder ein Schutzanzug mit eingearbeitetem Kopfteil für Feuerwehrleute sein.

Die eine Deckschicht kann aus einem faserfreien Material, z. B. aus einer Kunststoff-Folie bestehen. Mann kann hierdurch oder durch zusätzliches Beschichten mindestens eine Deckschicht luftundurchlässig machen und dadurch die Brandschutzwirkung verstärken, weil kann durch den Schichtkörper hindurch keine Luft zum Brandherd hindurchtreten kann. Man kann aber auch den Schichtkörper mit einer Flüssigkeit tränken und eine gewünschte Verbindung der körnigen Partikel untereinander und mit den Haltefasern oder -fäden herbeiführen. Hierdurch wird zwar eine höhere Steifigkeit in der Partikelschicht erzeugt, die jedoch durch die Biegsamkeit der Deckschichten zum Teil aufgehoben wird, die dann eine höhere Biegeelastizität aufweisen können, als die Partikelschicht. Auf diese Weise kann der erfindungsgemässe Schichtkörper z. B. auch in Form einer Platte hergestellt werden, die ebenfalls aufrollbar sein kann. Von dieser Platte können auch Streifen abgeschnitten werden, ohne dass körniges Material bzw. die körnigen Partikel herausfallen können, da sie an den Haltefasern oder -fäden gehalten werden. Als Flüssigkeit können je nach Material der Partikelschicht z. B. Wasser, Wasser mit einem Bindemittel oder ein flüssiges Bindemittel vorliegen. Bei Verwendung von z. B. Wasserglas kann in besonders vorteilhafter Weise eine unbrennbare Abbindung der körnigen Partikel, die dann Sand sein können, erfolgen. Es können den körnigen Partikeln aber auch blähende Materialien zugesetzt werden, die sich durch Flüssigkeit aufblähen und die Hohlräume ausfüllen.

Vorzugsweise sind die Haltefasern oder -fäden Bestandteil mindestens der einen Deckschicht, sodass dieselbe aktiv vernadelt ist. Die andere Deckschicht kann dagegen nur passiv vernadelt sein. Mindestens die eine Deckschicht besitzt dann Fasern oder Fäden von genügender Länge, damit dieselben sich durch die Partikelschicht hindurch in die andere Deckschicht erstrecken und eine gewünschte Festigkeit durch die Vernadelung erreicht wird. Die Länge der Fasern oder Fäden kann auch z. B. von der gewünschten Dicke des Schichtkörpers abhängen und z. B. 40-150 mm betragen. Die Deckschichten sind vorzugsweise über die gesamte Fläche des Schichtkörpers miteinander vernadelt, sodass eine ausreichende Vernadelungsdichte erreicht werden kann, die z. B. 20-200 Einstiche/cm$^2$ beträgt.

In einer weiteren Ausführungsform weist die eine Deckschicht mit den Partikeln ausgefüllte Vertiefungen auf, wobei diese Vertiefungen näpfchenartig oder auch länglich ausgebildet sein können. Hierdurch ist es möglich, z. B. einen besonders biegsamen, um die Stege zwischen den Näpfchen biegbaren Schichtkörper zu erhalten. Die Deckschichten können dabei an den vertiefungsfreien Stellen miteinander vernadelt und an den Vertiefungen selbst unvernadelt vorliegen, wodurch z. B. bei feuerhemmenden Zusätzen zu den körnigen Partikeln diese in besonders vorteilhafter Weise von Haltefasern frei wirken können.

Die Deckschichten können natürliche oder synthetische Fasern oder Gemische derselben enthalten. Dies können Glasfasern, Steinwollfasern, Silikatfasern, aber auch Fasern aus Plastikmaterial, wie z. B. Polypropylen- oder PVC-Fasern, sein. PVC-Fasern können den Vorteil haben, dass sie z. B. unbrennbar sind und daher der Schichtkörper nach der Erfindung mit derartigen Fasern in vorteilhagter Weise zum Schutz von Menschen gegen Brand und Wärme eingesetzt werden kann. Mit einem erfindungsgemässen Schichtkörper z. B. in Form einer Matte oder Decke können auch Gegenstände, z. B. Schränke, Panzerschränke od. dgl. umhüllt werden, wobei dies auch noch bei einem akuten Brand erfolgen kann, indem man den deckenartigen Schichtkörper um die zu schützenden Gegenstände hüllt und ihn zusätzlich auch mit Wasser besprengt bzw. anfeuchtet. Ein z. B. mit Wasser getränkter Schichtkörper kann dann einen zusätzlichen Brandschutz durch die Feuchtigkeit ergeben.

Eine einfache Ausbildung eines erfindungsgemässen Schichtkörpers, der z. B. in Form eines Mantels ausgebildet ist und dessen Deckschichten z. B. aus saugfähigen Fasern bestehen, kann z. B. als Schutzbekleidung in Hotels verwendet werden, wenn in diesen ein Brand ausbricht. Eine Person, die sich in einem brennenden Haus, wie z. B. einem Hotel, befindet, kann diese Bekleidung anziehen, sich mitsamt dieser Bekleidung unter eine Dusche stellen und, sobald diese Schutzbekleidung genug Wasser aufgesaugt hat, auch durch kleinere Brandbereiche hindurch aus dem Gebäude fliehen. Ist darüber hinaus, wie in vielen Hotels üblich, noch ein Löschschlauch vorhanden, so kann diese mit einer erfindungsgemässen Schutzbekleidung versehene Person von einer zweiten Person noch mit Wasser besprengt werden. Die in dem Schichtkörper enthaltenen Sandpartikel sorgen dabei dafür, dass auch dann, wenn an der Aussenfläche der Bekleidung kein Wasser mehr vorhanden ist, die Wärme nicht so schnell durch die Bekleidung hindurchdringt.

Weitere Einzelheiten und Vorteile der Erfindung ergeben sich aus den Unteransprüchen und aus den im folgenden, anhand der Zeichnung beschriebenen Ausführungsbeispielen. In der Zeichnung sind Teilbereiche erfindungsgemässer Schichtkörper im Schnit schematisch und vergrössert dargestellt.

Es zeigt :

Figur 1 eine erste Ausführungsform eines Schichtkörpers, bei dem beide deckschichten aus einem Faservlies bestehen und die Partikel gleichmässig verteilt sind ;

Figur 2 eine zweite Ausführungsform des Schichtkörpers, bei dem die eine Deckschicht mit näpfchenartigen Vertiefungen versehen ist, in der sich die Partikel befinden ;

Figur 3 eine dritte Asuführungsform, bei der die Partikel streifenförmig in dem Schichtkörper angeordnet sind, und

Figur 4 eine vierte Ausführungsform, bei der der Schichtkörper gemäss Figur 3 von zwei Seiten her vernadelt ist.

Ein Schichtkörper 1 weist eine hier obere Deckschicht 2 auf, die hier aktiv vernadelbar ist und aus einem Faservlies besteht. Eine hier untere Deckschicht 3, die mindestens passiv vernadelbar ist, wird von aus der oberen Deckschicht entnommenen Haltefasern 4 gegenüber der oberen Deckschicht 2 gehalten. Zwischen der oberen und der unteren Deckschicht 2 und 3 ist eine Schicht 5 aus körnigen Partikeln 6 angeordnet. Die beiden Deckschichten 2 und 3 sind durch die Partikelschicht 5 hindurch miteinander vernadelt. Die Vernadelung kann nach einem in der Nadelfilztechnologie bekannten Nadelverfahren erfolgen, wie es z. B. von R. Krčma im « Handbuch der Textilverbundstoffe », Deutscher Fachverlag, Frankfurt am Main, 1970, Seiten 198-202, beschrieben ist. In dieser Technologie werden zum Vernadeln am häufigsten Filznadeln mit dreieckigem Nadelschaft und seitlichen, gegen die Spitze zu gerichteten Widerhaken verwendet. Gebräuchlich sind auch andere Formen, wie Gabelnadeln und Loop-Nadeln.

Auch die im Buch R. Krčma erwähnten Nähwirknadeln lassen sich für die Vernadelung des Schichtkörpers entsprechend verwenden. Die Filznadeln erfassen beim Einstechen in die Faserschicht 2 einzelne oder Büschel von Fasern 4 aus dieser Faserschicht und verflechten sie mit der unteren Deckschicht 3. Die Faserschicht 2 muss zu diesem Zweck aktiv nadelfähig sein, d. h., es sollen sich Fasern aus dieser Schicht erfassen lassen, wobei ein Teilstück dieser Fasern 4 noch in der Schicht 2 verankert bleibt.

Durch den Nadelvorgang werden nicht nur die beiden Schichten 2 und 3 miteinander verbunden, es werden auch die körnigen Partikel 6 der Schicht 5 durch die zahlreich auf die ganze Fläche des Schichtkörpers 1 verteilt durchgezogenen Haltefasern 4 am seitlichen Verschieben gehindert. Dadurch ist es möglich, den Schichtkörper in beliebige Formen zu zerschneiden, ohne dass die Gesteinspartikel in wesentlicher Menge aus der Schnittkante herausrieseln.

Die Schicht 5 von körnigen Partikeln 6 besteht hier aus Gesteinspartikeln von geringer Korngrösse, z. B. aus Sand, der definitionsgemäss eine Korngrösse von 0,02-2 mm aufweist. Aber auch Grobsand und sogar Kies und feinkörniger Splitt sind verwendbar, soweit sie das Durchstossen der Filznadeln nicht ganz verhindern. Vorteilhafte gemeinsame Merkmale dieser Materialien sind ihre relativ hohe Wärmekapazität, ihr relativ grosses Gewicht bezogen auf eine bestimmte Schichtdicke und ihr inertes Verhalten gegenüber anderen Stoffen.

Wie sich schon aus der Zeichnung ergibt, kann die untere Deckschicht 3 aus verschiedenen Materialien bestehen. Diese untere Deckschicht 3 soll beim Durchstechen der Nadeln nicht aufsplittern und soll die durchgestochenen Haltefasern 4, z. B. elastisch, festhalten, z. B. durch Klemmung oder Verflechtung, d. h. die untere Deckschicht 3 soll passiv nadelfähig sein.

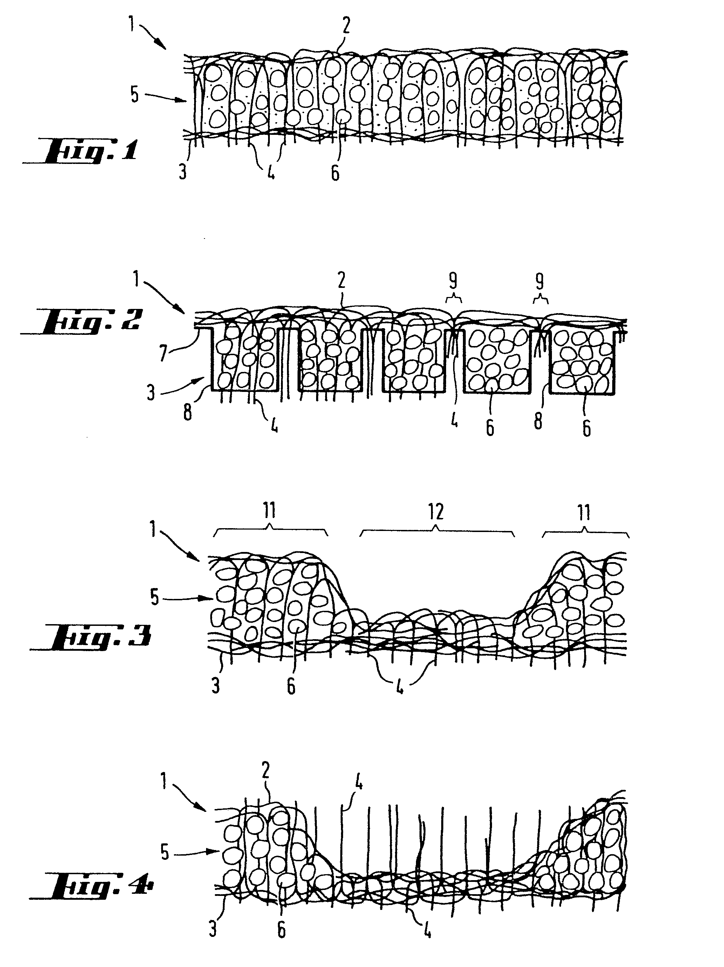

Es eignen sich hierfür z. B. Kunststoff-Folien aus weichelastischem Material (vgl. z. B. Fig. 2), Faserschichten in genügender Dichte, die durch den Nadelprozess selber noch weiter verdichtet und verfilzt werden, sodass sie die Gesteinspartikel zurückhalten, sowie adhäsiv gebundene Faserverbundstoffe. Die untere Deckschicht 3 kann auch aktiv nadelfähig sein, was erlaubt, den Schichtkörper 1, wie in Figur 4 dargestellt, zusätzlich von der Gegenseite her zu vernadeln. Es ist auch möglich, auf eine Kunststoff-Folie oder dgl. als untere Schicht 3 eine weitere aktiv nadelfähige Faserschicht aufzulegen und den Schichtkörper 1 von beiden Seiten her zu vernadeln.

Die Faserschicht, sei es als obere Deckschicht 2 oder als untere Deckschicht 3 eingesetzt, kann durch separate Vernadelung vorverdichtet sein, sie kann auf eine Trägerschicht, wie z. B. eine Kunststoff-Folie, einen Faserverbundstoff oder dgl., aufgenadelt sein, um die Handhabung bei der Herstellung zu erleichtern oder um das Durchsickern von feinen Gesteinspartikeln 6 und insbesondere von den gegebenenfalls, wie in Fig. 1 gezeigt, zugegebenen feuerhemmenden Stoffen zu verhindern.

Als Fasermaterial für das Faservlies kommen verschiedene organische oder anorganische Fasern in Frage. Es ist dabei nur darauf zu achten, dass diese Fasern nicht brennbar sind und einen besonders hohen Schmelzpunkt aufweisen. So lassen sich Metallkomplexfasern oder Fasern aromatischer Verbindungen ebenso verwenden wie PVC-Fasern. Es können auch saugfähige Fasern, wie Wolle, Baumwolle, Zellwolle oder Viskose, eingesetzt werden, die vorher zweckentsprechend behandelt werden.

Als Unterlagsschicht 3 kann anstelle des Faservlieses in Fig. 1 auch eine flache Folie, z. B. aus Aluminium oder aus mit Aluminium bedampftem Kunststoff oder auch ein Faserverbundstoff verwendet werden.

Wie insbesondere Figur 2 zeigt, kann diese Folie 7 mit Vertiefungen 8 versehen sein, die z. B. durch Tiefziehen im warmplastischen Zustand erzielt werden. Diese Vertiefungen 6 sind gemäss Figur 2 näpfchenartig ausgebildet. Diese Vertiefungen können jedoch auch länglich ausgebildet sein, wobei sie dann parallel zueinander zu liegen kommen und z. B. in ihrer Lage gegeneinander versetzt angeordnet sein können. Die Vertiefungen 8 öffnen sich dabei zur Deckschicht 2 hin, sodass in diese Vertiefungen die Partikel 6 eingebracht werden können. In dem Ausführungsbeispiel gemäss Figur 2 ist somit die Schicht 5 von Partikeln 6 nicht zusammenhängend, sondern in zahlreiche Portionen aufgeteilt. Die Nadeleinstiche können gleichmässig dicht über die ganze Fläche des Schichtkörpers 1 verteilt sein, wie dies bei den drei linken Näpfchen der Figur 2 gezeigt ist, wobei dort die Haltefasern 4 auch durch die Böden der Näpfchen hindurchgreifen. Wären die Haltefasern 4 weniger tief eingenadelt, wie dies einer nicht dargestellten Ausführungsform entspricht, so enden im Bereich der Vertiefungen 8 diese Haltefasern in den Näpfchen selbst, während die Haltefasern die vertiefungsfreien Stellen 9 der Kunststoff-Folie 7 durchdringen, wodurch die Deckschicht 2 mit der als Kunststoff-Folie 7 ausgebildeten Unterlagsschicht verbunden wird. Dabei kann beim Vernadeln des Schichtkörpers so vorgegangen werden, dass die Nadelspitzen trotzdem den Boden der Vertiefungen 8 perforieren, sodass Fluide auch von Seiten der Unterlagsschicht 3 in die Vertiefungen 8 fliessen können. Gemäss der Darstellung in der rechten Hälfte der Figur 2 ist die Deckschicht 2 mit der Kunststoff-Folie 7 nur im Bereich der vertiefungsfreien Stellen 9 durch Haltefasern 4 verbunden. Wenngleich die napfchenartig ausgebildeten Vertiefungen 8 selbst recht steif sind, so weist doch der Schichtkörper 1 eine relativ grosse Flexibilität auf, da die als Stege wirkenden, vertiefungsfreien Stellen 9 wie ein Scharnier wirken.

Bei der in Figuren 3 und 4 dargestellten Ausführungsform des Schichtkörpers 1 sind auf eine aktiv nadelfähige Faserschicht 3 Reihen oder Streifen von körnigen Partikeln 6 abgelegt. Diese bilden eine unterbrochene Zwischenschicht, durch welche hindurchgenadelt wird. Auf diese Reihen 11 von Partikeln 6 wird eine weitere aktiv nadelfähige Faserschicht 2 als Deckschicht abgelegt und der Schichtkörper von oben hindurch vernadelt.

5

Die Ausführungsform gemäss Figur 4 entspricht im wesentlichen der Ausführungsform gemäss Figur 3, hier wird nun allerdings der Schichtkörper 1 auch von unten her vernadelt, d. h. die Haltefasern 4 sind sowohl aus der Deckschicht 2, als auch der Unterlagsschicht 4 entnommen.

Den Ausführungsformen gemäss Figuren 3 und 4 ist nun gemeinsam, dass sie an den partikelfreien Stellen 12 eine Art Scharnier bilden, weshalb auch der so ausgebildete Schichtkörper 1 trotz der relativ steifen, mit Partikeln 6 versehenen Reihen 11 insgesamt noch relativ flexibel bleibt. Dies ist insbesondere dann wichtig, wenn aus einem solchen Schichtkörper eine Feuerschutzbekleidung hergestellt werden soll.

Aus folgender Tabelle, die nach Korndurchmesserbereichen der Partikel 6, zeilenweise gegliedert ist, ergeben sich bevorzugte zu verwendende Grössenbereiche für das Partikelgewicht pro Flächeneinheit, die Faserstärke. das Vliesgewicht je Faserschicht pro Flächeneinheit, die Nadelstärke und die Stichdichte.

| Korndurch-messer (mm) | Partikel-gewicht pro Flächeneinheit (kg/cm2) | Faser (dtex) | Vliesgewicht je Schicht, pro Flächen-einheit (g/m2) | Nadel-stärke (gg) | Stich-dichte (Stich/cm2) |
|---|---|---|---|---|---|
| 0.02-0.1 | 0.5 - 1 | < 10 | 150 | 36 | 200 - 100 |
| 0.1 -1.0 | 1 - 5 | 5-20 | 150 | 30 | 120 - 60 |
| 1 -3 | 1 - 10 | 10-30 | 250 | 25 | 60 - 20 |
| 3 -(30) | 5 - 12(20) | > 20 | 350 | 17 | 30 - 5 |

Wird als Unterlagsschicht 3 eine Kunststoff-Folie 7 verwendet wie im Fall der Fig. 2, so beträgt die Foliendicke zwischen 30 und 200 μm, wobei bei grösserem Korndurchmesser auch eine dickere Folie verwendet werden sollte.

Beispiel für die Herstellung eines Schichtkörpers 1, gemäss Fig. 1 :

Die Deckschicht 2 und die Unterlagsschicht 3 wurden identisch aus dem gleichen Material auf folgende Weise hergestellt. Auf eine Trägerfolie (in Fig. 1 nicht dargestellt) aus Polyäthylen von 0.1 mm Dicke wurde ein Fasergemisch von 200 g/m² von Polyester-Fasern mit einem Fasertiter von 3.3 und 17 dtex und einer Stapellänge von 90 mm abgelegt. Die Fasern wurden mit der Folie mittels konventioneller Filznadeln mit 45 Stichen pro cm² vorvernadelt. Eine solche vorvernadelte Faserschicht wurde mit den Faserbärten nach oben gerichtet auf den Zuführtisch der Nadelmaschine gelegt, dann darauf eine Schicht von gewaschenem Quarzsand der Korngrösse 0.5-0.75 mm in einer Menge von 7 kg/m² gestreut. Die Schicht wurde sodann mit einer identischen vorvernadelten Faserschicht mit den Faserbärten nach unten gerichtet, zugedeckt. Der ganze Schichtkörper wurde mit konventionellen 25 — gauge Filznadeln und mit 30 Stichen pro cm² vernadelt. Es entstand ein Schichtkörper von zirka 7.4 kg pro m² Flächengewicht.

Beispiel für die Herstellung eines Schichtkörpers 1, gemäss Fig. 2 :

Als Unterlagsschicht 3 wurde eine Noppenfolie 7 aus Polyäthylen mit zylinderischen Vertiefungen (Noppen) von 1 cm Durchmesser und 5 mm Tiefe, 7'700 Noppen pro m² verwendet. Die Noppen wurden mit Quarzsand gestrichen gefüllt, dann mit einer Schicht von Polypropylen-Fasern 17 dtex, Stappellänge 90 mm, 200 g/m² zugedeckt. Der Schichtkörper wurde mit konventionellen 25 — gauge Filznadeln mit 30 Stichen pro cm² vernadelt. Es entstand ein Schichtkörper 1 von zirka 1.8 kg pro m² Flächengewicht. Die Noppen waren durch die Nadeleinstiche perforiert worden. Der Sand konnte jedoch nicht herausfallen;

Mit einem erfindungsgemässen, als Löschmatte ausgebildeten Schichtkörper wurde ein Brandtest durchgeführt. Dazu wurden rund 500 g ofengetrocknete Kiefernholzspähne mit 1 Liter Dieselöl-Benzingemisch gezündet. Nachdem sich der Brand entfaltet hatte, wurde eine erfindungsgemässe erste Löschmatte auf die Brandstele gelegt und diese damit zur Hälfte abgedeckt. Während unter dieser Löschmatte das Feuer sehr schnell erstickt werden konnte, wurde diese erste Löschmatte einer Kantenbeflammung ausgesetzt. Nach einiger Zeit wurde über die zweite Hälfte der Brandstelle eine zweite Löschmatte geworfen, wodurch der Brand insgesamt kurz darauf erlosch. Beide benutzten Löschmatten zeigten lediglich Sengstellen und keinerlei Branddurchbrüche. Die Beschädigungen der Löschmatte waren dabei so gering, dass eine Wiederverwendung der Löschmatten möglich gewesen wäre.

## Patentansprüche

1. Schichtkörper als Brand- und Wärmeschutz mit zwei Deckschichten, von denen eine Fasermaterial enthält und von denen mindestens eine ungewebt vorliegt und die eine innere Schicht aus körnigem, feuerhemmendem, z. B. ein Gas abgebendem oder Sauerstoff verdünnendem oder verbrauchendem Material einschließen und miteinander verbunden sind, dadurch gekennzeichnet, daß die Deckschichten (2, 3) durch die innere Schicht (5) hindurch miteinander vernadelt sind und diese innere Schicht neben dem feuerhemmenden Material körnige Partikel (6) aus einem reaktionsträgen Material, wie Sand, Ton, Kies od. dgl., enthält.

2. Schichtkörper nach Anspruch 1, dadurch gekennzeichnet, daß die Partikel (6) eine Größe von 4 mm und weniger, vorzugsweise von 0,02 bis 2 mm, aufweisen.

3. Schichtkörper nach einem der vorhergehenden Ansprüche, dadurch gekennzeichnet, daß die Partikel (6) mit einem Flächengewicht von 0,5 bis 5 kg/m² vorliegen.

4. Schichtkörper nach einem der vorhergehenden Ansprüche, dadurch gekennzeichnet, daß er als Decke, Matte oder Kissen ausgebildet ist.

5. Schichtkörper nach einem der vorhergehenden Ansprüche, dadurch gekennzeichnet, daß die feuerhemmenden Zusätze als Granulat, Pellets oder Pulver vorliegen.

6. Schichtkörper nach einem der vorhergehenden Ansprüche, dadurch gekennzeichnet, daß die feuerhemmenden Zusätze mit den körnigen Partikeln (6) gemischt, z. B. durch dieselben verdünnt, vorliegen.

7. Schichtkörper nach einem der Ansprüche 1 bis 5, dadurch gekennzeichnet, daß die feuerhemmenden Zusätze an die körnigen Partikel (6) gebunden vorliegen.

8. Schichtkörper nach einem der vorhergehenden Ansprüche, dadurch gekennzeichnet, daß die feuerhemmenden Zusätze trockene Chemikalien, z. B. Natriumbikarbonat (NaHCO$_3$), Kaliumbikarbonat (KHCO$_3$), Natriumdihydrogenphosphat (NaH$_2$PO$_4$) oder Ammoniumhydrogensulphat (NH$_4$HSO$_4$) sind.

9. Schichtkörper nach einem der vorhergehenden Ansprüche, dadurch gekennzeichnet, daß die eine Deckschicht (3) aus einem faserfreien Material, z. B. aus einer Kunststoffolie (7) besteht.

10. Schichtkörper nach Anspruch 9, dadurch gekennzeichnet, daß die Kunststoffolie (7) mit Aluminium bedampft ist.

11. Schichtkörper nach einem der Ansprüche 1 bis 9, dadurch gekennzeichnet, daß die eine Deckschicht (3) aus einer Aluminiumfolie besteht.

12. Schichtkörper nach einem der vorhergehenden Ansprüche, dadurch gekennzeichnet, daß mindestens die andere Deckschicht (2) lange Fasern oder Fäden mit einer Länge von 40 bis 150 mm enthält.

13. Schichtkörper nach Anspruch 12, dadurch gekennzeichnet, daß die Fasern Wollfasern sind.

14. Schichtkörper nach einem der vorhergehenden Ansprüche, dadurch gekennzeichnet, daß die Haltefasern (4) oder -fäden Bestandteil mindestens der einen Deckschicht (2) sind.

15. Schichtkörper nach Anspruch 14, dadurch gekennzeichnet, daß mindestens die eine Deckschicht (2) durch die aus ihr stammenden Haltefasern (4) oder -fäden aktiv vernadelt ist.

16. Schichtkörper nach einem der vorhergehenden Ansprüche, dadurch gekennzeichnet, daß die Deckschichten (2, 3) über die gesamte Fläche des Schichtkörpers (1) miteinander vernadelt sind.

17. Schichtkörper nach einem der vorhegehenden Ansprüche, dadurch gekennzeichnet, daß die eine Deckschicht (3) z. B. näpfchenartige oder längliche, mit den Partikeln (6) ausgefüllte Vertiefungen (8) aufweist.

18. Schichtkörper nach Anspruch 17, dadurch gekennzeichnet, daß die Deckschichten (2, 3) an den vertiefungsfreien Stellen (9) miteinander vernadelt sind und an den Vertiefungen (8) unvernadelt vorliegen.

19. Schichtkörper nach einem der vorhergehenden Ansprüche, dadurch gekennzeichnet, daß eine Vernadelungsdichte von 20 bis 200 Einstichen/cm² vorliegt.

20. Schichtkörper nach einem der vorhergehenden Ansprüche, dadurch gekennzeichnet, daß er biegsam, z. B. rollbar oder aufwickelbar ist.

## Claims

1. Laminated body for protection against fire and heat with two covering layers of which one contains fibrous material and of which at least one is present in non-woven form, and which incorporate between them an inner layer of granular fire-inhibiting material, e. g. giving off a gas or diluting or consuming oxygen, and are connected together, characterised in that the covering layers (2, 3) are needled together through the inner layer (5) and this inner layer, in addition to the fire-inhibiting material, contains granular particles (6) of an inert material such as sand, clay, gravel, or the like.

2. Laminated body according to claim 1, characterised in that the particles (6) have a size of 4 mm and below, preferably from 0.02 to 2 mm.

3. Laminated body according to one of the foregoing claims, characterised in that the particles (6) are present at a weight per unit area of 0.5 to 5 kg/m².

7

4. Laminated body according to one of the foregoing claims, characterised in that it is in the form of a blanket, mat or cushion.

5. Laminated body according to one of the foregoing claims, characterised in that the fire-inhibiting additives are present in the form of grains, pellets or powder.

6. Laminated body according to one of the foregoing claims, characterised in that the fire-inhibiting additives are present mixed with the granular particles (6), e. g. diluted by them.

7. Laminated body according to one of claims 1 to 5, characterised in that the fire-inhibiting additives are present bonded to the granular particles (6).

8. Laminated body according to one of the foregoing claims, characterised in that the fire-inhibiting additives are dry chemicals, e. g. sodium bicarbonate ($NaHCO_3$), potassium bicarbonate ($KHCO_3$), sodium dihydrogen phosphate ($NaH_2PO_4$) or ammonium hydrogen sulphate ($NH_4HSO_4$).

9. Laminated body according to one of the foregoing claims, characterised in that the one covering layer (3) comprises a non-fibrous material, e. g. a synthetic resin sheet (7).

10. Laminated body according to claim 9, characterised in that the synthetic resin sheet (7) is sprayed with aluminium.

11. Laminated body according to one of claims 1 to 9, characterised in that the one covering layer (3) comprises an aluminium foil.

12. Laminated body according to one of the foregoing claims, characterised in that at least the other covering layer (2) contains long fibres or threads having a length of 40 to 150 mm.

13. Laminated body according to claim 12, characterised in that the fibres are wool fibres.

14. Laminated body according to one of the foregoing claims, characterised in that the retaining fibres (4) or threads are components of at least the one covering layer (2).

15. Laminated body according to claim 14, characterised in that at least the one covering layer (2) is actively needled by the retaining fibres (4) or threads originating from it.

16. Laminated body according to one of the foregoing claims, characterised in that the covering layers (2, 3) are needled together over the whole surface area of the body (1).

17. Laminated body according to one of the foregoing claims, characterised in that the one covering layer (3) has recesses (8), e. g. of pot-shape or elongated form, filled with the particles (6).

18. Laminated body according to claim 17, characterised in that the covering layers (2, 3) are needled together at those points (9) where the recesses are not present and are free of needling at the recesses (8).

19. Laminated body according to one of the foregoing claims, characterised in that the density of needling is from 20 to 200 stitches/cm$^2$.

20. Laminated body according to one of the foregoing claims, characterised in that it is flexible, e. g. capable of being rolled or coiled up.

**Revendications**

1. Corps stratifié servant de protection contre la chaleur et l'incendie et comportant deux couches de couverture dont l'une contient un matériau fibreux, dont au moins l'une est non tissée et qui enferment une couche intérieure de matière granulée, retardant la combustion et consommant ou diluant l'oxygène ou cédant un gaz, par exemple, et qui sont reliées l'une à l'autre, caractérisé en ce que les couches de couverture (2, 3) sont aiguilletées ensemble en passant par la couche intérieure (5) et en ce que cette couche intérieure (5) contient, en plus de la matière retardant la combustion, des particules granulées (6) provenant d'une matière peu réactive, à savoir du sable, de l'argile, du gravier ou analogues.

2. Corps stratifié selon la revendication 1, caractérisé en ce que les particules (6) ont une grosseur de 4 mm et moins, de préférence de 0,02 à 2 mm.

3. Corps stratifié selon l'une quelconque des revendications 1 et 2, caractérisé en ce que les particules (6) ont un poids par unité de surface de 0,5 à 5 kg par mètre carré.

4. Corps stratifié selon l'une quelconque des revendications 1 à 3, caractérisé en ce qu'il est réalisé sous la forme d'une couverture, d'une natte ou d'un coussin.

5. Corps stratifié selon l'une quelconque des revendications 1 à 4, caractérisé en ce que les additifs retardant la combustion sont des granulés, des pastilles ou des poudres.

6. Corps stratifié selon l'une quelconque des revendications 1 à 5, caractérisé en ce que les additifs retardant la combustion sont mélangés avec les particules granulées (6), par exemple, sont dissous par celles-ci.

7. Corps stratifié selon l'une quelconque des revendications 1 à 5, caractérisé en ce que les additifs retardant la combustion sont liés aux particules granulées (6).

8. Corps stratifié selon l'une quelconque des revendications 1 à 7, caractérisé en ce que les additifs retardant la combustion sont des produits chimiques secs, par exemple, du bicarbonate de sodium ($NaHCO_3$), du bicarbonate de potassium ($KHCO_3$), du dihydrogénophosphate de sodium ($NaH_2PO_4$) ou de l'hydrogénosulfate d'ammonium ($NH_4HSO_4$).

9. Corps stratifié selon l'une quelconque des revendications 1 à 8, caractérisé en ce que l'une des couches de couverture (3) se compose d'une matière exempte de fibres, par exemple, d'une feuille de matière synthétique (7).

**0 071 210**

10. Corps stratifié selon la revendication 9, caractérisé en ce que la feuille de matière synthétique (7) est recouverte d'aluminium par métallisation.

11. Corps stratifié selon l'une quelconque des revendications 1 à 10, caractérisé en ce que l'une des couches de couverture (3) se compose d'une feuille d'aluminium.

12. Corps stratifié selon l'une quelconque des revendications 1 à 11, caractérisé en ce qu'au moins l'autre couche de couverture (2) contient de longues fibres ou fils d'une longueur de 40 à 150 mm.

13. Corps stratifié selon la revendication 12, caractérisé en ce que les fibres sont des fibres de laine.

14. Corps stratifié selon l'une quelconque des revendications 1 à 13, caractérisé en ce que les fibres de retenue (4) ou fils sont les composants d'au moins l'une des couches de couverture (2).

15. Corps stratifié selon la revendication 14, caractérisé en ce qu'au moins l'une des couches de couverture (2) est aiguilletée activement par les fibres de retenue (4) ou fils provenant de cette couche.

16. Corps stratifié selon l'une quelconque des revendications 1 à 15, caractérisé en ce que les couches de couverture (2, 3) sont aiguilletées ensemble sur la surface entière du corps stratifié (1).

17. Corps stratifié selon l'une quelconque des revendications 1 à 16, caractérisé en ce que l'une des couches de couverture (3) comprend, par exemple, des évidements (8) en forme de petits godets ou assez allongés, remplis de particules (6).

18. Corps stratifié selon la revendication 17, caractérisé en ce que les couches de couverture (2, 3) sont aiguilletées ensemble aux endroits (8) exempts d'évidements et ne sont pas aiguilletées aux évidements (8).

19. Corps stratifié selon l'une quelconque des revendications 1 à 18, caractérisé en ce que la densité de l'aiguilletage est de 20 à 200 piqûres par centimètre carré.

20. Corps stratifié selon l'une quelconque des revendications 1 à 19, caractérisé en ce qu'il est souple, par exemple, en ce qu'il peut être roulé ou enroulé.

9

Fig. 1

Fig. 2

Fig. 3

Fig. 4